# EUROPÄISCHE PATENTSCHRIFT

(11) **EP 0 543 960 B1**
(45) Veröffentlichungstag und Bekanntmachung des Hinweises auf die Patenterteilung: **02.11.1994**
(21) Anmeldenummer: 92909769.9
(22) Anmeldetag: 15.05.1992
(51) Int. Cl.: F16B 19/08, F16B 19/10, F16B 5/04

(54) **NIETVERBINDER**
RIVET CONNECTOR
ELEMENT DE FIXATION A RIVET

(30) Priorität: 17.06.1991 DE 4119934
(43) Veröffentlichungstag der Anmeldung: 02.06.1993
(73) Patentinhaber: SFS Industrie Holding AG, 9435 Heerbrugg (CH)
(72) Erfinder: PALM, Erich, CH-9435 Heerbrugg (CH)
(74) Vertreter: Ludescher, Hans
(86) Internationale Anmeldenummer: EP9201069
(87) Internationale Veröffentlichungsnummer: WO9222751

(56) Entgegenhaltungen:
- CH-A- 671 617
- CH-A- 673 792
- DE-C- 4 003 373
- FR-A- 2 160 842

## Beschreibung

Die Erfindung betrifft einen Nietverbinder, bestehend aus einer Niethülse sowie einem in die Niethülse einsetzbaren Nietdorn mit einem bolzenförmigen Schaft und einem an diesem angeordneten oder ausgebildeten, gegenüber dem Durchmesser des Schaftes größeren Kopfansatz, an welchem ein Bohrteil angeordnet oder ausgebildet ist, wobei an der Niethülse ein Anschlagflansch ausgebildet ist.

Ein solcher Nietverbinder ist in der DE-C1-40 03 373 beschrieben und gezeigt. Solche bekannte Nietverbinder werden dort eingesetzt, wo zwei Werkstücke fest und unverrückbar miteinander verbunden werden sollen. Die Niethülse liegt also passend in der durch beide Werkstücke hindurchgehenden Bohrung, so daß sich diese beiden Werkstücke nicht relativ zueinander verschieben können.

Bei der gegenseitigen Verbindung von Werkstücken, welche sich trotz der gegenseitigen Verbindung relativ zueinander und quer zur Längsachse des Nietverbinders verschieben können oder müssen, kann ein solcher bekannter Nietverbinder nicht eingesetzt werden. Gerade bei der gegenseitigen Verbindung von Werkstücken aus unterschiedlichen Materialien ist es notwendig, daß sich diese quer zur Achse des Nietverbinders geringfügig verschieben können, um dadurch einen Ausgleich bei z.B. Wärmedehnungen usw. zu schaffen. Eine solche Notwendigkeit ist z.B. bei Dach- und Wandverkleidungen gegeben, wobei die aus den unterschiedlichsten Materialien bestehenden Verkleidungs- oder Dachelemente mit dem festen, z.B. aus Metallprofilen gebildeten Unterbau verbunden werden sollen.

Es ist bereits ein Metall-Blindniet bekannt geworden (CH-A-671 617), mit welchem eine derartige Möglichkeit erreicht werden kann. In diesem Falle werden in die beiden zu verbindenden Werkstücke Bohrungen unterschiedlichen Durchmessers gebohrt. In dem einen Werkstück sitzt also die Niethülse des Nietverbinders fest und im anderen Werkstück ist eine größere Bohrung vorgesehen, so daß sich diese beiden Werkstükke relativ zueinander bewegen können. Bei einer solchen Ausführung sind Maßnahmen zu setzen, um Bohrungen unterschiedlichen Durchmessers in einem Arbeitsgang bohren zu können. Vorgesehen werden bei dieser Ausführungsvariante radial abstehende Bohrflügel, deren Bohrdurchmesser größer ist als der Bohrteil am vorderen Ende des Nietverbinders. Gerade bei Nietverbindern mit relativ kleinem Durchmesser ist eine solche Konstruktion aber nicht einsetzbar, wobei allein schon aus Gründen der Verformbarkeit des Materials am Nietdorn keine so langen, radial abstehenden Bohrflügel geschaffen werden können.

Die vorliegende Erfindung hat sich daher zur Aufgabe gestellt, einen Nietverbinder der eingangs genannten Art zu schaffen, mit welchem zwei Werkstücke miteinander verbunden werden können, wobei sich diese Werkstücke relativ zueinander quer zur Längsachse des Nietverbinders verschieben können.

Erfindungsgemäß wird dazu vorgeschlagen, daß die Niethülse in deren Achsrichtung gesehen aus zwei Abschnitten verschiedenen Durchmessers oder verschiedener Aussenabmessungen gebildet ist, wobei der eine Abschnitt mit größerem Durchmesser oder größerer Außenabmessung an dem dem Anschlagflansch gegenüberliegenden Endbereich der Niethülse vorgesehen ist, und daß der Abschnitt mit größerem Durchmesser oder größerer Außenabmessung wenigstens annähernd dem Bohrdurchmesser des dem Kopfansatz des Nietdornes zugeordneten Bohrteiles entsprechend ausgeführt ist.

Durch die erfindungsgemäßen Maßnahmen ist die Möglichkeit geschaffen worden, in einem Werkstück eine Bohrung mit durchgehend gleichem Durchmesser herzustellen, wobei trotzdem eine Verspreizungsmöglichkeit des freien Endes der Niethülse für den Setzvorgang der Nietverbindung gegeben ist. Es ist dadurch ferner gewährleistet, daß die Niethülse immer zentrisch in der hergestellten Bohrung eingesetzt ist, so daß eine Verschiebung der miteinander verbundenen Werkstücke relativ zueinander nach allen Richtungen hin ermöglicht wird.

Gerade bei Nietverbindern der eingangs genannten Art wirken sich die erfindungsgemäßen Maßnahmen besonders vorteilhaft aus, da der beim Setzvorgang für die Verspreizung herangezogene Bereich der Niethülse wiederum dem Bohrdurchmesser entspricht, so daß eine ausreichend feste Nietverbindung hergestellt werden kann.

Eine vorteilhafte Ausführung liegt darin, daß die beiden Abschnitte der Niethülse als getrennt voneinander gefertigte Teile ausgeführt sind. Es ist dadurch nicht nur die Herstellung der Niethülse mit den unterschiedlichen Durchmesserabschnitten oder den Abschnitten verschiedener Außenabmessungen in einfacher Weise möglich, sondern es wird dadurch gerade die Möglichkeit geschaffen, für die beiden Abschnitte der Niethülse unterschiedliche Materialien einzusetzen oder Werkstoffe mit verschiedenem Werkstoffgefüge oder verschiedener Härte.

Die einfachste Ausführung liegt dabei darin, daß die beiden Abschnitte der Niethülse stumpf aneinander stoßend aufeinander folgen. Es ist also lediglich bei der Vormontage des Nietverbinders sozusagen eine zusätzliche Hülse, also der Abschnitt mit dem größeren Durchmesser, einzusetzen. Im Rahmen der Erfindung ist es aber auch denkbar, daß die beiden Abschnitte der Niethülse an ihrer Stoßstelle ineinander eingreifen. Es wäre dadurch eine Vormontage der Niethülse an sich möglich. Bei einer solchen Ausführung wäre es gemäß einer weiteren Variante auch denkbar, die beiden Abschnitte der Niethülse verdrehfest miteinander zu verbinden. Diese verdrehfeste Verbindung kann allein durch das passende Ineinanderstecken oder aber durch eine Klebe-, Löt- oder Schweißverbindung erfolgen.

Bei der einfachsten Ausführungsvariante wird vorgeschlagen, daß die beiden Abschnitte der Niethülse aus dem gleichen Werkstoff gefertigt sind. In den meisten Einsatzfällen genügt ja eine entsprechende Werkstoffwahl für die Niethülse, so daß die beiden Abschnitte ohne weiteres aus dem gleichen Werkstoff gefertigt werden können.

Für besondere Einsätze ist es jedoch durch die erfindungsgemäße Konstruktion möglich geworden, daß die beiden Abschnitte der Niethülse aus verschiedenem Werkstoff gefertigt werden können. Es ergeben sich dadurch wesentlich verbesserte Einsatzmöglichkeiten und vor allem ein wesentlich erweiterter Einsatzbereich.

Zu diesem Zweck wird u.a. vorgeschlagen, daß der eine Abschnitt mit größerem Durchmesser oder größerer Außenabmessung aus leicht verformbaren Material, wie Aluminium, Kupfer, Kunststoff oder Gummi, gefertigt ist. Dementsprechend sind auch verschiedene Varianten des anderen Abschnittes möglich, wobei vorgeschlagen wird, daß der Abschnitt der Niethülse mit kleinerem Durchmesser oder kleinerer Aussenabmessung, welcher einstückig mit dem Anschlagflansch der Niethülse ausgeführt ist, aus Metall, Kunststoff oder Holz gefertigt ist. Allein schon aus den sich ergebenden Möglichkeiten bei der Materialauswahl ist die breite Anwendungsmöglichkeit solcher Nietverbinder ersichtlich.

Um einen einfachen Setzvorgang des Nietverbinders ausführen zu können und eine Spreizung des freien Endes der Niethülse, also des Abschnittes mit dem größeren Außendurchmesser, bewirken zu können, wird vorgeschlagen, daß der Abschnitt der Niethülse mit dem größeren Durchmesser oder größerer Außenabmessung zumindest über einen Teil dessen Länge von dessen dem Anschlagflansch abgewandten Ende ausgehend wenigstens eine zumindest annähernd achsparallel verlaufende Soll-Bruchlinie aufweist. Es wird dadurch beim Weiterdrehen des Nietdornes zur Durchführung des endgültigen Setzvorganges der freie Endbereich der Niethülse aufgespreizt, so daß eine ordnungsgemäße Nietverbindung herstellbar ist. Eine solche Konstruktion ist aber nur dann vorteilhaft und notwendig, wenn die Niethülse aus entsprechend hartem Material oder überhaupt aus Metall gefertigt ist.

Die einfachste Ausführung in diesem Zusammenhang liegt darin, daß die Soll-Bruchlinie(n) als achsparallel verlaufende Erhebung(en), Nut(en) oder Schlitz(e) ausgeführt ist (sind). Es ist dadurch ein rasches Aufspreizen der Niethülse möglich, da ja durch das Weiterdrehen des Nietdornes ein rasches Eindringen des Kopfansatzes des Nietdorns in die Niethülse gewährleistet werden soll.

Um ein zentrisches Setzen des Nietverbinders zu ermöglichen bzw. eine sichere Nietverbindung herzustellen, ist es von besonderem Vorteil, wenn der Abschnitt der Niethülse mit kleinerem Durchmesser eine axiale Länge aufweist, welche kleiner als die Gesamtdicke der zu verbindenden Werkstücke, jedoch größer als die Dicke des unmittelbar an den Anschlagflansch anschließend vorgesehenen Werkstückes ausgebildet ist. Es wird dadurch gewährleistet, daß der an den Anschlagflansch der Niethülse anschließende Abschnitt derselben eine quer zur Achsrichtung verlaufende Verschiebung des Werkstückes ermöglicht, und daß der Abschnitt mit größerem Durchmesser oder größerer Außenabmessung zumindest in einem Abschnitt eines der zu verbindenden Werkstücke passend eingreift.

Die Erfindung wird in der nachstehenden Beschreibung anhand der Zeichnung noch näher erläutert. Es zeigen:

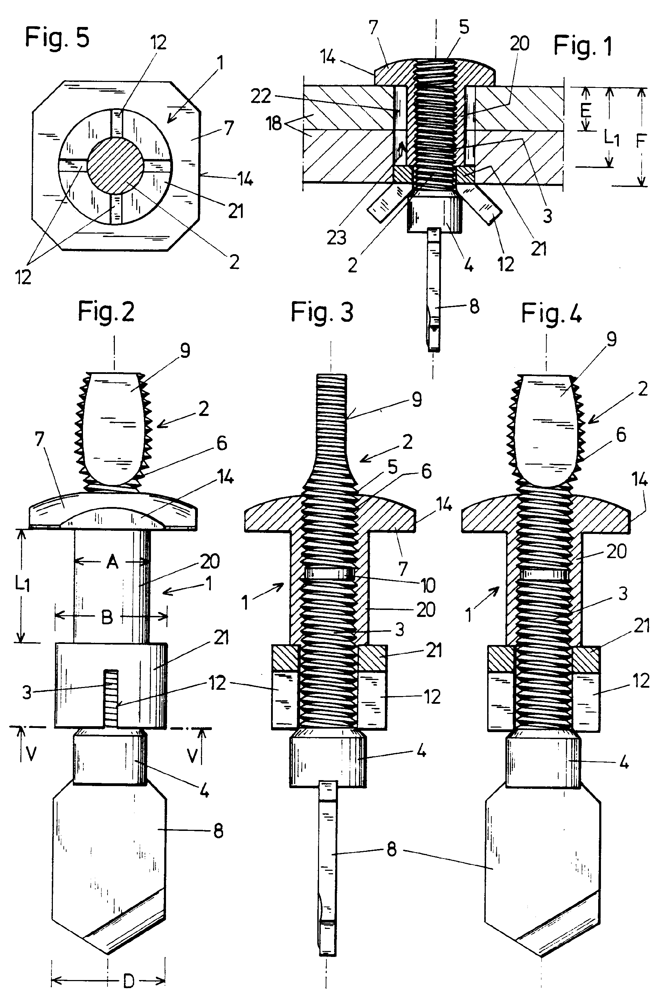

- Fig. 1: eine Nietverbindung mit einem erfindungsgemäßen Nietverbinder;
- Fig. 2: eine Ansicht des Nietverbinders;
- Fig. 3: einen Längsschnitt durch den Nietverbinder;
- Fig. 4: ebenfalls einen Längsschnitt durch den Nietverbinder, jedoch gegenüber der Darstellung in Fig. 3 um 90° verdreht dargestellt;
- Fig. 5: einen Schnitt nach der Linie V-V in Fig. 2.

Der Nietverbinder besteht im wesentlichen aus einer Niethülse 1 und einem Nietdorn 2. Der Nietdorn 2 ist aus einem bolzenförmigen Schaft 3 und einem an diesem angeordneten oder ausgebildeten, gegenüber dem Durchmesser des Schaftes größeren Kopfansatz 4 gebildet. Die Niethülse 1 ist mit einem Innengewinde 5 versehen, welches vor oder beim Setzvorgang gefertigt wird. Der Schaft 3 des Nietdornes 2 ist mit einem korrespondierenden Außengewinde 6 versehen. An einem an der Niethülse 1 ausgebildeten Anschlagflansch 7 sind eine oder mehrere am Umfang verteilt angeordnete Abflachungen 14 als Werkzeugangriffsflächen vorgesehen.

Am Kopfansatz 4 ist ein Bohrteil 8 angeordnet bzw. ausgebildet. Bei der gezeigten Ausführungsform ist ein plättchenförmiger Schneidteil vorgesehen. Es ist aber auch denkbar, hier einen im Querschnitt kreisförmigen Bohrteil einzusetzen.

Es handelt sich bei der dargestellten Ausführung also um einen nach dem Bohrvorgang durch eine weitere Drehbewegung zu setzenden Nietverbinder.

Die Bohrdrehrichtung und die Drehrichtung beim Anziehen des Nietdornes 2 sind gleichlaufend, wobei das Innengewinde 5 an der Niethülse 1 und das Außengewinde 6 am Schaft 3 beim Bohren der Drehrichtung entgegenlaufen. Es ist also bei einer im Uhrzeigersinn gerichteten Bohrdrehung am Schaft 3 und an der Niethülse 1 ein Linksgewinde vorgesehen. Bei einem Bohrvorgang entgegen dem Uhrzeigersinn ist entsprechend ein Rechtsgewinde am Schaft 3 und an der Niethülse 1 vorgesehen.

Das Innengewinde 5 an der Niethülse 1 führt wenigstens über einen Teil ihrer Länge. Das Außengewinde 6 am Nietdorn 2 ist bei der gezeigten Ausführung praktisch über die ganze Länge des Nietdornes 2 geführt, kann aber ebenso nur über einen Teilbereich dessen Länge vorgesehen werden.

Die Niethülse 1 ist in deren Achsrichtung gesehen aus zwei Abschnitten 20 und 21 gebildet, wobei diese zwei Abschnitte 20 und 21 verschiedene Durchmesser A bzw. B aufweisen. Der Abschnitt 21 mit dem größeren Durchmesser B ist an dem dem Anschlagflansch 7 abgewandten Endbereich der Niethülse 1 vorgesehen. Der Abschnitt 21 mit dem größeren Durchmesser B ist wenigstens annähernd dem Bohrdurchmesser D des dem Kopfansatz 4 des Nietdornes 2 zugeordneten Bohrteils 8 entsprechend ausgeführt.

Es wurde erläutert, daß die beiden Abschnitte 20 und 21 verschiedene Durchmesser A bzw. B aufweisen. Es wäre aber auch denkbar, daß diese beiden Abschnitte 20 und 21 verschiedene Außenabmessungen aufweisen, da diese Abschnitte 20, 21 nicht unbedingt einen kreisförmigen Querschnitt aufweisen müssen. Es wäre also auch denkbar, die Abschnitte 20 und 21 der Niethülse 1 im Querschnitt mehreckig oder unrund auszuführen oder aber den einen Abschnitt 20 oder 21 im Querschnitt kreisförmig und den anderen Abschnitt 20 bzw. 21 mit einer anderen Querschnittsausführung auszubilden.

Die beiden Abschnitte 20, 21 der Niethülse 1 sind beim gezeigten Ausführungsbeispiel als getrennt voneinander gefertigte Teile ausgeführt. Dies ist aus Herstellungsgründen vorteilhaft, wobei auch eine Anpassung an verschiedene Einsatzmöglichkeiten leichter gegeben ist. Die beiden Abschnitte 20 und 21 stoßen bei der gezeigten Ausführungsform stumpf aneinander, wobei der Innendurchmesser des Abschnittes 21 annähernd dem Gewindeaußendurchmesser des Nietdornes 2 entspricht. Der Abschnitt 21 kann also praktisch über das Gewinde geschoben werden, so daß das Gewinde nicht in den Abschnitt 21 eingreift. Dieser Abschnitt 21 ist also lediglich für den Verspreizvorgang beim Setzen des Nietverbinders vorgesehen.

Im Rahmen der Erfindung wäre es aber auch möglich, daß die beiden Abschnitte 20, 21 der Niethülse 1 an ihrer Stoßstelle ineinander eingreifen. Dies ist beispielsweise dann zweckmäßig, wenn die komplette Niethülse 1 vormontiert werden soll. In diesem Zusammenhang wäre es auch möglich, die beiden Abschnitte 20, 21 verdrehfest miteinander zu verbinden, z.B. zu Verkleben, zu Verlöten oder zu Verschweißen.

Die beiden Abschnitte können aus dem gleichen Werkstoff gefertigt sein oder aber auch aus verschiedenen Werkstoffen oder aus Werkstoffen mit verschiedenem Materialgefüge. Eine solche Ausbildung ist insbesondere dann von Vorteil, wenn auf Korrosionsschutz, eine Anpassung an verschiedene Oberflächen, auf Abdichtungsvorschriften oder Geräuschminderungsvorschriften geachtet werden soll.

So ist es also möglich, daß der Abschnitt 21 mit dem größeren Durchmesser B aus leicht verformbaren Material, wie Aluminium, Kupfer, Kunststoff oder Gummi, gefertigt ist. Der Abschnitt 20 der Niethülse 1 mit kleinerem Durchmesser A, welcher einstückig mit dem Anschlagflansch 7 der Niethülse 1 ausgeführt ist, kann beispielsweise aus Metall, Kunststoff oder Holz gefertigt werden.

Der Abschnitt 21 der Niethülse 1 weist zumindest über einen Teil dessen Länge von dessen dem Anschlagflansch 7 abgewandten Ende ausgehend wenigstens eine zumindest annähernd achsparallel verlaufende Soll-Bruchlinie auf. Diese Soll-Bruchlinien sind bei der gezeigten Ausführungsform als achsparallel verlaufende Nuten 12 ausgeführt. Es wäre auch denkbar, lediglich eine solche Nut 12 vorzusehen oder aber Soll-Bruchlinien in Form von Einkerbungen oder Schlitzen auszubilden. Eine solche Ausführung verbessert den Setzvorgang wesentlich, da das freie Ende der Niethülse 1 entsprechend aufspreizen kann, wenn sich der Kopfansatz 4 durch den weiteren Drehvorgang des Nietdornes in die Niethülse 1 hineinzieht.

Der Abschnitt 20 der Niethülse 1 mit kleinerem Durchmesser A weist eine axiale Länge L1 auf, welche kleiner als die Gesamtdicke F der zu verbindenden Werkstücke 18, jedoch größer als die Dicke E des unmittelbar an den Anschlagflansch 7 anschließend vorgesehenen Werkstückes 18 ausgebildet ist. Es kann sich dadurch das dem Anschlagflansch 7 zugewandte Werkstück 18 auch nach dem Setzvorgang der Nietverbindung relativ zum darunterliegenden Werkstück 18 verschieben, so daß Wärmedehnungen ausgeglichen werden können, ohne daß es Spannungsrisse oder Beschädigungen für die Nietverbindung geben würde. Daher ist ein solcher Nietverbinder immer auch dort von Vorteil einsetzbar, wo unterschiedliche Werkstücke 18, also Werkstücke aus verschiedenem Material oder verschiedenem Materialgefüge miteinander verbunden werden sollen.

Beim Bohrvorgang durch die Werkstücke 18 wird also durch den Bohrteil 8 in den Werkstücken 18 eine Bohrung 22 hergestellt, welche im Durchmesser D annähernd dem Durchmesser B des Abschnittes 21 der Niethülse 1 entspricht. Der Abschnitt 21 der Niethülse 1 greift zumindest über einen Teilbereich dessen axialer Länge in den unteren Endbereich der Bohrung 22 in den Werkstücken 18 ein. Es wird somit zumindest zwischen dem oberen Werkstück 18 und dem Abschnitt 20 ein freier Ringraum 23 gebildet, so daß sich die beiden Werkstücke 18 relativ zueinander quer zur Achsrichtung des Nietverbinders bewegen können.

Bei der vorliegenden Erfindung ist die Niethülse also aus zwei in axialer Richtung aufeinander folgenden Abschnitten 20, 21 mit verschiedenem Durchmesser A bzw. B oder verschiedenen Außenabmessungen gebildet. Beim Setzvorgang, also beim Anziehen der Nietverbindung, bleiben diese beiden Abschnitte 20 und 21 nach wie vor gegeneinander unverschiebbar in axialer Richtung, werden also nicht wie bei verschiedenen bekannten Nietverbindern übereinandergeschoben, sondern es wird hier der Abschnitt 21 vom Abschnitt 20 in axialer Richtung unverschiebbar abgestützt, da nur auf diese Weise eine ordnungsgemäße Nietverbindung gemäß der vorliegenden Erfindung erfolgen kann.

Daß am Nietdorn 2 entsprechende Soll-Bruchstellen 10 und Angriffsflächen 9 vorhanden sind, um den Bohr- und Setzvorgang durchführen zu können, ist selbstverständlich, und es wird daher nicht näher darauf eingegangen. Die Ausbildung der Soll-Bruchstellen und der Angriffsmöglichkeiten für einen Angriff eines Drehwerkzeuges kann auf verschiedene Art und Weise ausgeführt werden.

In der Zeichnung ist nur die Ausführungsvariante gezeigt, bei der der Nietdorn und eine Niethülse über ein Gewinde in gegenseitigem Eingriff sind. Im Rahmen der Erfindung ist es auch möglich, durch Zugeinwirkung zu setzende Nietverbinder so auszugestalten, wobei dann z.B. der Abschnitt 21 der Niethülse ebenfalls mit Spreizlaschen ausgeführt oder aber beim Setzvorgang zylindrisch aufweitbar ist.

## Patentansprüche

1. Nietverbinder, bestehend aus einer Niethülse sowie einem in die Niethülse einsetzbaren Nietdorn mit einem bolzenförmigen Schaft und einem an diesem angeordneten oder ausgebildeten, gegenüber dem Durchmesser des Schaftes größeren Kopfansatz, an welchem ein Bohrteil angeordnet oder ausgebildet ist, wobei an der Niethülse ein Anschlagflansch ausgebildet ist, **dadurch gekennzeichnet,** daß die Niethülse (1) in deren Achsrichtung gesehen aus zwei Abschnitten (20, 21) verschiedenen Durchmessers (A, B) oder verschiedener Außenabmessungen gebildet ist, wobei der eine Abschnitt (21) mit größerem Durchmesser (B) oder größerer Außenabmessung an dem dem Anschlagflansch (7) gegenüberliegenden Endbereich der Niethülse (1) vorgesehen ist und der Abschnitt (21) mit größerem Durchmesser (B) oder größerer Außenabmessung wenigstens annähernd dem Bohrdurchmesser (D) des dem Kopfansatz (4) des Nietdornes (2) zugeordneten Bohrteils (8) entsprechend ausgeführt ist.

2. Nietverbinder nach Anspruch 1, dadurch gekennzeichnet, daß die beiden Abschnitte (20, 21) der Niethülse (1) als getrennt voneinander gefertigte Teile ausgeführt sind.

3. Nietverbinder nach Anspruch 2, dadurch gekennzeichnet, daß die beiden Abschnitte (20, 21) der Niethülse (1) stumpf aneinander stoßend aufeinander folgen.

4. Nietverbinder nach Anspruch 2, dadurch gekennzeichnet, daß die beiden Abschnitte (20, 21) der Niethülse (1) an ihrer Stoßstelle ineinander eingreifen.

5. Nietverbinder nach einem der Ansprüche 2 bis 4, dadurch gekennzeichnet, daß die beiden Abschnitte (20, 21) der Niethülse (1) verdrehfest miteinander verbunden sind.

6. Nietverbinder nach einem der Ansprüche 2 bis 5, dadurch gekennzeichnet, daß die beiden Abschnitte (20, 21) der Niethülse (1) aus dem gleichen Werkstoff gefertigt sind.

7. Nietverbinder nach einem der Ansprüche 2 bis 5, dadurch gekennzeichnet, daß die beiden Abschnitte (20, 21) der Niethülse (1) aus verschiedenen Werkstoffen gefertigt sind.

8. Nietverbinder nach Anspruch 7, dadurch gekennzeichnet, daß der eine Abschnitt (21) mit größerem Durchmesser (B) oder größerer Außenabmessung aus leicht verformbaren Material, wie Aluminium, Kupfer, Kunststoff oder Gummi, gefertigt ist.

9. Nietverbinder nach einem der vorhergehenden Ansprüche, dadurch gekennzeichnet, daß der Abschnitt (20) der Niethülse (1) mit kleinerem Durchmesser (A) oder kleinerer Außenabmessung, welcher einstückig mit dem Anschlagflansch (7) der Niethülse (1) ausgeführt ist, aus Metall, Kunststoff oder Holz gefertigt ist.

10. Nietverbinder nach einem der vorhergehenden Ansprüche, dadurch gekennzeichnet, daß der Abschnitt (21) der Niethülse (1) mit größerem Durchmesser (B) oder größerer Außenabmessung zumindest über einen Teil dessen Länge von dessen dem Anschlagflansch (7) abgewandten Ende ausgehend wenigstens eine zumindest annähernd achsparallel verlaufende Soll-Bruchlinie aufweist.

11. Nietverbinder nach Anspruch 10, dadurch gekennzeichnet, daß die wenigstens eine Soll-Bruchlinie als achsparallel verlaufende Einkerbung, Nut (12) oder Schlitz ausgeführt ist.

12. Nietverbinder nach einem der vorhergehenden Ansprüche, dadurch gekennzeichnet, daß der Abschnitt (20) der Niethülse (1) mit kleinerem Durchmesser (A) eine axiale Länge (L1) aufweist, welche kleiner als die Gesamtdicke (F) der zu verbindenden Werkstücke (18), jedoch größer als die Dicke (E) des unmittelbar an den Anschlagflansch (7) anschließend vorgesehenen Werkstückes (18) ausgebildet ist.

## Claims

1. A rivet fastener, comprising a rivet sleeve and a rivet mandrel which can be inserted into the rivet sleeve and which has a bolt-like shank, and a head extension which is provided or formed thereon, which is larger than the diameter of the shank and on which a drilling member is provided or formed, an abutment flange being formed on the rivet sleeve, characterised in that, viewed in its axial direction, the rivet sleeve (1) is formed from two portions (20, 21) of different diameter (A, B) or of different outer dimensions, wherein one portion (21) of larger diameter (B) or larger outer dimensions is provided on the end portion of the rivet sleeve (1) situated opposite the abutment flange (7) and the portion (21) of larger diameter (B) or larger outer dimensions is formed corresponding at least approximately to the drill diameter (D) of the drilling member (8) associated with the head extension (4) of the rivet mandrel (2).

2. A rivet fastener according to Claim 1, characterised in that the two portions (20, 21) of the rivet sleeve (1) are formed as separately produced parts.

3. A rivet fastener according to Claim 2, characterised in that the two portions (20, 21) of the rivet sleeve (1) succeed one another in a mutually butt-jointed manner.

4. A rivet fastener according to Claim 2, characterised in that the two portions (20, 21) of the rivet sleeve (1) engage in one another at their butt joint.

5. A rivet fastener according to any one of Claims 2 to 4, characterised in that the two portions (20, 21) of the rivet sleeve (1) are connected with one another in a manner precluding independent rotation.

6. A rivet fastener according to any one of Claims 2 to 5, characterised in that the two portions (20, 21) of the rivet sleeve (1) are made from the same material.

7. A rivet fastener according to any one of Claims 2 to 5, characterised in that the two portions (20, 21) of the rivet sleeve (1) are made from different materials

8. A rivet fastener according to Claim 7, characterised in that the portion (21) of larger diameter (B) or larger outer dimensions is made from easily deformable material, such as aluminium, copper, plastics or rubber.

9. A rivet fastener according to any one of the preceding Claims, characterised in that the portion (20) of the rivet sleeve (1) of smaller diameter (A) or smaller outer dimensions, which is formed integrally with the abutment flange (7) of the rivet sleeve (1), is made from metal, plastics or wood.

10. A rivet fastener according to any one of the preceding Claims, characterised in that the portion (21) of the rivet sleeve (1) of larger diameter (B) or larger outer dimensions at least over a part of its length, starting from the end remote from the abutment flange (7), has at least one predetermined breaking line extending at least approximately axially parallel.

11. A rivet fastener according to Claim 10, characterised in that the at least one predetermined breaking line is in the form of an axially parallel extending indentation, groove (12) or slot.

12. A rivet fastener according to any one of the preceding Claims, characterised in that the portion (20) of the rivet sleeve (1) of smaller diameter (A) has an axial length (L1) which is smaller than the overall thickness (F) of the workpieces (18) to be joined but greater than the thickness (E) of the workpiece (18) disposed immediately adjacent the abutment flange (7).

## Revendications

1. Organe de liaison à rivet composé d'une douille de rivet ainsi que d'une broche de rivet logée dans la corps douille et ayant un corps en forme de goujon et une tête de diamètre supérieur à celui du corps prévue sur celui-ci ou formée sur celui-ci, , et qui porte ou est conformée en organe de perçage, une bride de butée étant réalisée sur la douille du rivet, caractérisé en ce que la douille (1) se compose, dans sa direction axiale, de deux segments (20, 21) de diamètres différents (A, B) ou de dimensions extérieures différentes, l'un des segments (21) de grand un diamètre (B) ou de grande dimension extérieure est prévue à celle des zones d'extrémité de la douille de rivet (1) opposée à la bride d'appui (7) et le segment (21) de grand diamètre (B) ou de grande dimension extérieure est réalisé au moins sensiblement de manière correspondante au diamètre de perçage (D) de la partie de perçage (8) associée à la tête (4) de la broche (2) du rivet.

2. Organe de liaison à rivet selon la revendication 1, caractérisé en ce que les deux segments (20, 21) de la douille de rivet (1) sont réalisés sous la forme de pièces fabriquées séparément.

3. Organe de liaison en forme de rivet selon la revendication 2, caractérisé en ce que les deux segments (20, 21) de la douille (1) sont en butée bout à bout.

4. Organe de liaison à rivet selon la revendication 2, caractérisé en ce que les deux segments (20, 21) de la douille de rivet (1) s'interpénètrent à leur jonction.

5. Organe de liaison à rivet selon l'une des revendications 2 à 4, caractérisé en ce que les deux segments (20, 21) de la douille de rivet (1) sont reliés solidairement en rotation.

6. Organe de liaison à rivet selon l'une des revendications 2 à 5, caractérisé en ce que les deux segments (20, 21) de la douille de rivet (1) sont fabriqués dans le même matériau.

7. Organe de liaison à rivet selon l'une des revendications 2 à 5, caractérisé en ce que les deux segments (20, 21) de la douille de rivet (1) sont réalisés dans des matériaux différents.

8. Organe de liaison à rivet selon la revendication 7, caractérisé en ce que le segment (21) de grand diamètre (B) ou de grandes dimensions extérieures est en un matériau facilement déformable comme de l'aluminium, du cuivre, de la matière plastique ou du caoutchouc.

9. Organe de liaison à rivet selon l'une des revendications précédentes, caractérisé en ce que le segment (20) de la douille de rivet (1) de petit diamètre (A) ou de petites, dimensions extérieures et qui fait corps avec la bride (7) de la douille de rivet (1) est en métal, en matière plastique ou en bois.

10. Organe de liaison à rivet selon l'une des revendications précédentes, caractérisé en ce que le segment (21) de la douille de rivet (1) de grand diamètre (B) ou de grandes dimensions extérieures présente au moins sur une partie de sa longueur, en partant de son extrémité opposée à celle de la bride de butée (7), au moins une ligne de rupture de consigne au moins pratiquement parallèle à l'axe.

11. Organe de liaison à rivet selon la revendication 10, caractérisé en ce qu'au moins une ligne de rupture de consigne est réalisée sous la forme d'une encoche, d'une rainure (12) ou d'une fente parallèle à l'axe.

12. Organe de liaison à rivet selon l'une des revendications précédentes, caractérisé en ce que le segment (20) de la douille à rivet (1) présente une partie de diamètre (A) de longueur axiale (L1) inférieure à l'épaisseur totale (F) des pièces (18) à relier mais supérieure à l'épaisseur (E) de la pièce (18) directement adjacente à la bride de butée (7).
